# EUROPÄISCHE PATENTSCHRIFT

(11) **EP 3 372 431 B1**
(45) Veröffentlichungstag und Bekanntmachung des Hinweises auf die Patenterteilung: **14.10.2020**
(21) Anmeldenummer: 18157060.7
(22) Anmeldetag: 16.02.2018
(51) Int. Cl.: B60K 7/00, B60K 17/04

(54) **ANTRIEBSEINRICHTUNG FÜR EIN KRAFTFAHRZEUG UND KRAFTFAHRZEUG MIT MINDESTENS EINER ANTRIEBSEINRICHTUNG**
DRIVE DEVICE FOR A MOTOR VEHICLE AND MOTOR VEHICLE WITH AT LEAST ONE DRIVE DEVICE
DISPOSITIF D'ENTRAÎNEMENT POUR UN VÉHICULE AUTOMOBILE ET VÉHICULE AUTOMOBILE DOTÉ D'AU MOINS UN DISPOSITIF D'ENTRAÎNEMENT

(30) Priorität: 06.03.2017 DE 102017203587
(43) Veröffentlichungstag der Anmeldung: 12.09.2018
(73) Patentinhaber: AUDI AG, 85045 Ingolstadt (DE)
(72) Erfinder: Albl, Sebastian, 85080 Gaimersheim (DE); Schmitz, Jürgen, 86668 Karlshuld (DE); Hübler, Stefan, 85748 Garching (DE); Scharlach, Albert, 85129 Oberdolling (DE)

(56) Entgegenhaltungen:
- EP-A2- 2 310 220
- DE-A1-102010 017 966
- DE-A1-102010 020 576
- DE-U1- 29 518 401
- US-A1- 2006 225 930
- US-A1- 2009 014 223

## Beschreibung

Die Erfindung betrifft eine Antriebseinrichtung für ein Kraftfahrzeug. Die Erfindung betrifft außerdem ein Kraftfahrzeug mit mindestens einer Antriebseinrichtung.

Typischerweise werden elektrische Antriebseinrichtungen zum Antrieb von Kraftfahrzeugen an deren Vorder- und/oder Hinterachse mit der Drehachse des Antriebsaggregats quer zur Fahrtrichtung verbaut. Unter einem Kraftfahrzeug wird insbesondere ein Personenkraftwagen oder ein Nutzfahrzeug verstanden. Diese Anordnung führt zu einem hohen Bauraumbedarf, wodurch eine Leistungs- und/oder Drehmomentspreizung eingeschränkt wird, insbesondere weil ein erforderlicher zusätzlicher Bauraum für geeignete Getriebe nicht zur Verfügung steht. Der zur Verfügung stehende Bauraum lässt sich durch den Einsatz von Achsen mit Federbeinen zwar vergrößern, es ergeben sich aber Nachteile, wie beispielsweise eine reduzierte Durchladebreite im Gepäckraum, Schwierigkeiten bei der Realisierung einer Cabrio- oder Kombiversion des Kraftfahrzeugs sowie erhöhte Herstellungskosten. Insgesamt ist die Umsetzung von Doppelantrieben an einer Achse, beispielsweise zur Realisierung einer Drehmomentverteilung (torque vectoring), bei dieser Anordnung der Achsantriebe schwierig oder - insbesondere bei kleineren Fahrzeugklassen - nur mit deutlichen Leistungseinbußen oder gar nicht möglich.

Aus dem Stand der Technik ist beispielsweise die Druckschrift DE 44 34 237 A1 bekannt. Diese betrifft eine Fahrzeugachse mit elektrischen Einzelradantrieben, bei welcher vermieden werden soll, dass bei ungleichmäßiger Belastung der Antriebsräder der Fahrzeugachse einer der Einzelradantriebe über längere Zeit überbeansprucht wird. Ferner soll eine Überdimensionierung der Einzelradantriebe vermieden werden. Hierfür wird vorgeschlagen, eine Kupplung vorzusehen, durch die die Einzelradantriebe miteinander kraftschlüssig verbindbar sind. Durch eine Steuerung lässt sich die Kupplung derart ansteuern, dass sie automatisch schließt und die beiden Einzelradantriebe kraftschlüssig miteinander verbindet, sofern ein vorgebbarer Lenkwinkel des Fahrzeugs unterschritten ist und/oder eine unterschiedliche Belastung der Einzelradantriebe vorliegt.

Weiterhin zeigt die Druckschrift DE 10 2010 010 438 A1 ein Fahrwerk für ein Kraftfahrzeug, mit einer elektrischen Achse, die zwei elektrische Maschinen aufweist, wobei im Bereich der Enden der elektrischen Achse jeweils ein Rad drehbar gelagert ist und jedes Rad mittels der dieser zugeordneten elektrischen Maschine antreibbar ist, sowie mit einem zwischen der jeweiligen elektrischen Maschine und dem dieser zugeordneten Rad angeordneten Untersetzungsgetriebe. Hierbei ist vorgesehen, dass das jeweilige Untersetzungsgetriebe über eine Gelenkwelle an das diesem Untersetzungsgetriebe zugeordnete Rad angebunden ist sowie die jeweilige Rotationsachse der beiden elektrischen Maschinen parallel nebeneinander angeordnet sind.

Weiterhin beschreibt die Druckschrift DE 11 2012 001 601 T5 eine Hinterradantriebsvorrichtung, die Druckschrift DE 10 2010 017 966 A1 ein Fahrzeug mit elektrischem Antrieb, die Druckschrift DE 10 2015 103 906 A1 einen Elektroantriebsstrang und die Druckschrift DE 10 2010 020 576 A1 ein elektrisches Antriebssystem für ein Kraftfahrzeug.

Der Erfindung liegt die Aufgabe zugrunde, eine Antriebseinrichtung für ein Kraftfahrzeug und ein Kraftfahrzeug mit mindestens einer Antriebseinrichtung zu schaffen, wobei gegenüber bekannten Antriebseinrichtungen und Kraftfahrzeugen in vorteilhafter Weise ein erforderlicher Bauraum für die Antriebseinrichtung verringert ist.

Die Aufgabe wird durch den Gegenstand des unabhängigen Anspruchs 1 gelöst. Vorteilhafte Ausgestaltungen ergeben sich aus den Unteransprüchen.

Die Antriebseinrichtung weist zahlreiche Vorteile gegenüber dem Stand der Technik auf. Dadurch, dass das erste Antriebsaggregat und das zweite Antriebsaggregat achsparallel zueinander angeordnet sind, kann ein Bauraumbedarf für die Antriebseinrichtung verringert werden. In Folge ist es möglich, eine Leistungs- und/oder Drehmomentspreizung insbesondere durch Verwendung geeigneter Getriebe mittels der Antriebseinrichtung an der Radachse eines Kraftfahrzeugs zu steigern, wobei ein Energieverbrauch beim Betrieb eines solchen Kraftfahrzeugs gesenkt werden kann.

Im Vergleich zu einem Antrieb der Radachse mit lediglich einem Antriebsaggregat entfällt bei der erfindungsgemäßen Ausgestaltung in vorteilhafter Weise das Differentialgetriebe. Dadurch, dass insbesondere jedes Rad der Radachse separat angetrieben wird, kann eine Drehmomentverteilung (torque vectoring) zwischen den Rädern realisiert werden. Weiterhin kann ein günstigeres Längen/Breiten-Leistungsverhältnis der Antriebseinrichtung realisiert werden, wodurch eine Nutzung derselben für verschiedene Kraftfahrzeugklassen möglich ist. Zudem sind Kosteneinsparungen durch Synergien möglich, da die Antriebseinrichtung in analoger Ausführung sowohl an der Vorder- als auch an der Hinterachse verwendet werden kann.

Die Radachse ist vorzugsweise als Vorderachse oder Hinterachse eines Kraftfahrzeugs ausgebildet. Das erste Antriebsaggregat und das zweite Antriebsaggregat sind vorzugsweise voneinander verschiedene Antriebsaggregate. Vorzugsweise sind die erste Teilachse und die zweite Teilachse voneinander verschiedene und/oder voneinander beabstandete Teilachsen. Die erste Teilachse ist vorzugsweise mit einem ersten Rad eines Kraftfahrzeugs wirkverbindbar oder wirkverbunden, insbesondere starr und/oder permanent, und die zweite Teilachse vorzugsweise mit einem zweiten Rad des Kraftfahrzeugs. Die Räder sind insoweit derselben Radachse zugeordnet. Das erste Antriebsaggregat ist insbesondere eingerichtet, um das erste, mit der ersten Teilachse drehmomentübertragend koppelbare Rad anzutreiben, wobei das zweite Antriebsaggregat insbesondere eingerichtet ist, um das zweite, mit der zweiten Teilachse drehmomentübertragend koppelbare Rad anzutreiben. Das erste Rad und das zweite Rad sind vorzugsweise Räder einer Vorderachse oder einer Hinterachse eines Kraftfahrzeugs. Vorzugsweise ist es vorgesehen, dass eine erste erfindungsgemäße Antriebseinrichtung eingerichtet ist zum Antrieb einer Vorderachse eines Kraftfahrzeugs, wobei eine zweite erfindungsgemäße Antriebseinrichtung eingerichtet ist zum Antrieb einer Hinterachse dieses Kraftfahrzeugs.

Besonders bevorzugt ist das erste Antriebsaggregat mit der ersten Teilachse drehmomentübertragend koppelbar oder gekoppelt, insbesondere starr und/oder permanent, und von der zweiten Teilachse entkoppelt, vorzugsweise vollständig. Besonders bevorzugt ist das zweite Antriebsaggregat mit der zweiten Teilachse drehmomentübertragend koppelbar oder gekoppelt, insbesondere starr und/oder permanent, und von der ersten Teilachse entkoppelt, vorzugsweise vollständig.

Gemäß einer Weiterbildung der Erfindung ist vorgesehen, dass das erste Antriebsaggregat und das zweite Antriebsaggregat in Querrichtung bezüglich der Drehachse der ersten Teilachse oder der zweiten Teilachse, besonders bevorzugt der ersten Teilachse und der zweiten Teilachse, fluchtend angeordnet sind. Die Querrichtung bezüglich der Drehachse der ersten Teilachse und/oder der zweiten Teilachse ist vorzugsweise eine Richtung, welche im Wesentlichen parallel zu einer Ebene, auf welcher ein Kraftfahrzeug steht oder fährt, verläuft. Vorzugsweise verläuft die Querrichtung in horizontaler Richtung. Durch die fluchtende Anordnung des ersten Antriebsaggregats und des zweiten Antriebsaggregats kann eine besonders kompakte Anordnung derselben realisiert werden, was zu einem verringerten erforderlichen Bauraum führt.

Gemäß einer Weiterbildung der Erfindung ist vorgesehen, dass eine erste Antriebswelle des ersten Antriebsaggregats und eine zweite Antriebswelle des zweiten Antriebsaggregats jeweils parallel zu der Drehachse der ersten Teilachse oder der zweiten Teilachse, besonders bevorzugt zu der ersten Teilachse und der zweiten Teilachse, angeordnet sind. Vorzugsweise sind die erste Antriebswelle und die zweite Antriebswelle voneinander verschiedene Antriebswellen. Vorzugsweise sind die erste Antriebswelle und die zweite Antriebswelle jeweils als Rotorwellen eines Elektromotors ausgebildet. Durch diese Anordnung der ersten Antriebswelle und der zweiten Antriebswelle kann eine besonders kompakte Ausgestaltung der Antriebseinrichtung realisiert werden, was in vorteilhafter Weise zu einem verringerten Bauraumbedarf führt.

Gemäß der Erfindung ist vorgesehen, dass die Antriebseinrichtung ein erstes Getriebe zur Drehmomentübertragung zwischen dem ersten Antriebsaggregat und der ersten Teilachse aufweist. Zusätzlich ist vorgesehen, dass die Antriebseinrichtung ein zweites Getriebe zur Drehmomentübertragung zwischen dem zweiten Antriebsaggregat und der zweiten Teilachse aufweist. Vorzugsweise sind dabei das erste Getriebe und das zweite Getriebe voneinander verschiedene Getriebe. Auf diese Weise kann die Antriebseinrichtung insbesondere hinsichtlich einer Drehmomentübertragung an spezifische Erfordernisse einer Anwendung derselben in Kraftfahrzeugen angepasst werden, wodurch eine Verwendung in verschiedenen Kraftfahrzeugtypen vereinfacht wird und damit Kosten gesenkt werden können.

Die Erfindung sieht vor, dass das erste Getriebe und das zweite Getriebe jeweils als Stirnradgetriebe ausgebildet sind. Es sind das erste Getriebe und das zweite Getriebe jeweils als Stirnradgetriebe mit jeweils zwei Getriebestufen ausgebildet. Mittels der Stirnradgetriebe kann in technologisch ausgereifter und kostengünstiger Weise eine sichere Drehmomentübertragung realisiert werden.

Die Erfindung sieht zudem vor, dass eine Verlagerung der ersten Teilachse relativ zu dem ersten Antriebsaggregat in Querrichtung bezüglich der Drehachse der ersten Teilachse durch eine bestimmte Drehung der mindestens einen Getriebestufe des ersten Getriebes bewirkbar ist. Alternativ oder zusätzlich ist vorgesehen, dass eine Verlagerung der zweiten Teilachse relativ zu dem zweiten Antriebsaggregat in Querrichtung bezüglich der Drehachse der zweiten Teilachse durch eine bestimmte Drehung der mindestens einen Getriebestufe des zweiten Getriebes bewirkbar ist. Vorzugsweise sind die erste Teilachse und die zweite Teilachse jeweils unabhängig voneinander verlagerbar. Insbesondere ist die Querrichtung bezüglich der Drehachse der ersten Teilachse und/oder der zweiten Teilachse eine Richtung, welche in einer Längsrichtung und/oder in einer Höhenrichtung eines Kraftfahrzeugs, in welches die Antriebseinrichtung eingebaut ist, verläuft.

Bei der erfindungsgemäßen Antriebseinrichtung weist das erste Getriebe zwei Getriebestufen auf, wobei eine Verlagerung der ersten Teilachse durch eine bestimmte Drehung einer ersten der beiden Getriebestufen und/oder einer zweiten der beiden Getriebestufen und/oder beider Getriebestufen des ersten Getriebes bewirkbar ist. Alternativ oder zusätzlich weist das zweite Getriebe erfindungsgemäß zwei Getriebestufen auf, wobei eine Verlagerung der zweiten Teilachse durch eine bestimmte Drehung einer ersten der beiden Getriebestufen und/oder einer zweiten der beiden Getriebestufen und/oder beider Getriebestufen des zweiten Getriebes bewirkbar ist. Es ist vorgesehen, dass eine bestimmte Drehung jeweils aller Getriebestufen des ersten Getriebes und/oder des zweiten Getriebes durchführbar ist. Auf diese Weise sind/ist die erste Teilachse und/oder zweite Teilachse in einem bestimmten Bereich frei gegenüber dem ersten und/oder dem zweiten Antriebsaggregat verlagerbar. Somit kann eine Integrierbarkeit der erfindungsgemäßen Antriebseinrichtung in Kraftfahrzeuge verschiedener Ausgestaltung und mit verschiedenen Bauraumausbildungen vereinfacht werden.

Eine weitere Ausgestaltung der Erfindung sieht vor, dass das erste Antriebsaggregat und das zweite Antriebsaggregat jeweils als Elektromotor ausgebildet sind. Mittels der als Elektromotor ausgebildeten Antriebsaggregate ist es in vorteilhafter Weise möglich, eine Drehmomentverteilung zwischen den durch die Elektromotoren angetriebenen Teilachsen zu realisieren.

Die Aufgabe wird insbesondere auch gelöst, indem ein Kraftfahrzeug mit mindestens einer Antriebseinrichtung geschaffen wird. Besonders bevorzugt wird ein Kraftfahrzeug mit mindestens einer Antriebseinrichtung nach einem der zuvor beschriebenen Ausführungsformen geschaffen. Im Zusammenhang mit dem Kraftfahrzeug ergeben sich insbesondere die Vorteile, die bereits in Zusammenhang mit der erfindungsgemäßen Antriebseinrichtung erläutert werden. Die Antriebseinrichtung weist dabei ein erstes Antriebsaggregat, ein zweites Antriebsaggregat und eine eine erste Teilachse und eine zweite Teilachse aufweisende Radachse auf. Die Teilachsen sind dabei in Längsrichtung bezüglich einer Drehachse der ersten Teilachse und/oder der zweiten Teilachse zumindest teilweise auf einander gegenüberliegenden Seiten des ersten Antriebsaggregats und des zweiten Antriebsaggregats angeordnet. Die erste Teilachse ist mit dem ersten Antriebsaggregat drehmomentübertragend gekoppelt, wobei die zweite Teilachse mit dem zweiten Antriebsaggregat drehmomentübertragend gekoppelt ist. Das erste Antriebsaggregat und das zweite Antriebsaggregat sind dabei achsparallel zueinander angeordnet.

Die Erfindung sieht vor, dass die beiden Antriebsaggregate in Längsrichtung des Kraftfahrzeugs hintereinander angeordnet sind. Das erste Antriebsaggregat und das zweite Antriebsaggregat i sind unmittelbar aufeinanderfolgend, also unmittelbar aneinander angrenzend, in Längsrichtung des Kraftfahrzeugs angeordnet. Die Längsrichtung des Kraftfahrzeugs ist vorzugsweise eine Richtung, die insbesondere bei einer Geradeausfahrt des Kraftfahrzeugs in Fahrtrichtung desselben weist. Insbesondere weist die Längsrichtung des Kraftfahrzeugs von einer Front des Kraftfahrzeugs zu einem Heck desselben, oder umgekehrt. Mittels dieser Anordnung wird eine besonders kompakte Anordnung der beiden Antriebsaggregate realisiert, wodurch ein für die Antriebseinrichtung erforderlicher Bauraum verringert wird.

Eine weitere Ausführungsform der Erfindung sieht vor, dass das erste Antriebsaggregat und das zweite Antriebsaggregat an einem bezüglich einer Karosserie des Kraftfahrzeugs federnd aufgehängten Hilfsrahmen angeordnet sind. Insbesondere ist der Hilfsrahmen eingerichtet, um die erfindungsgemäße Antriebseinrichtung zu tragen, wobei die Antriebseinrichtung insbesondere über den Hilfsrahmen vorzugsweise mittels Federn an der Karosserie des Kraftfahrzeugs angelenkt oder aufgehängt ist, beziehungsweise an dieser angreift. Mittels der Anordnung des ersten Antriebsaggregats und des zweiten Antriebsaggregats in dem Hilfsrahmen wird eine insbesondere modulare Ausgestaltung der Antriebseinrichtung realisiert, wodurch eine Mehrfachverwendung in verschiedenen Kraftfahrzeugtypen vereinfacht wird, was zu Kostensenkungen führt.

Die Erfindung wird im Folgenden anhand der Zeichnung näher erläutert, ohne dass eine Beschränkung der Erfindung erfolgt. Dabei zeigen:
- Figur 1: eine schematische Darstellung einer Antriebseinrichtung in einem Kraftfahrzeug in einer Draufsicht,
- Figur 2: eine schematische Darstellung der Antriebseinrichtung mit einem Getriebe in einer ersten Betriebsstellung in einer Seitenansicht,
- Figur 3: eine schematische Darstellung der Antriebseinrichtung mit dem Getriebe gemäß Figur 2 in einer zweiten Betriebsstellung in einer Seitenansicht, und
- Figur 4: eine schematische Darstellung der Antriebseinrichtung mit dem Getriebe gemäß der Figuren 2 und 3 in einer dritten Betriebsstellung in einer Seitenansicht.

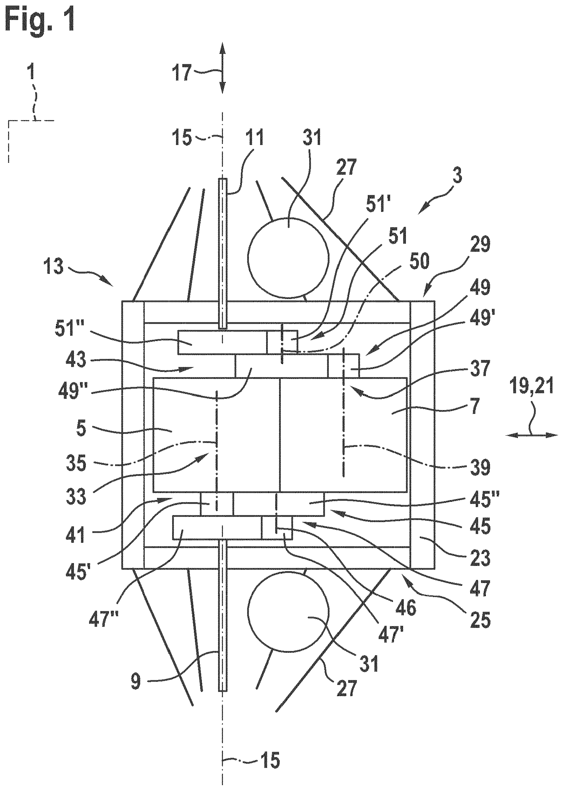

Figur 1 zeigt schematisch ein Kraftfahrzeug 1. Das Kraftfahrzeug 1 weist mindestens eine Antriebseinrichtung 3, bei dem Ausführungsbeispiel gemäß Figur 1 genau eine Antriebseinrichtung 3, auf. Die Antriebseinrichtung 3 weist ein erstes Antriebsaggregat 5, ein zweites Antriebsaggregat 7 und eine eine erste Teilachse 9 und eine zweite Teilachse 11 aufweisende Radachse 13 auf. Die Teilachsen 9, 11 sind in Längsrichtung bezüglich einer Drehachse 15 der ersten Teilachse 9 und/oder der zweiten Teilachse 11 zumindest teilweise auf einander gegenüberliegenden Seiten des ersten Antriebsaggregats 5 und des zweiten Antriebsaggregats 7 angeordnet. Die Längsrichtung bezüglich der Drehachse 15 ist mit einem Doppelpfeil gekennzeichnet, welchem das Bezugszeichen 17 zugeordnet ist. Bei einem alternativen Ausführungsbeispiel, welches in Figur 1 nicht dargestellt ist, sind die Drehachsen 15 der ersten Teilachse 9 und der zweiten Teilachse 11 relativ zueinander parallel versetzt ausgebildet.

Die erste Teilachse 9 ist mit dem ersten Antriebsaggregat 5 drehmomentübertragend gekoppelt. Vorzugsweise ist die erste Teilachse 9 als erste Abtriebswelle der Antriebseinrichtung 3 ausgebildet und eingerichtet, um eine Drehmomentübertragung zwischen dem ersten Antriebsaggregat 5 und einem - in Figur 1 nicht dargestellten - ersten Rad des Kraftfahrzeugs 1 zu realisieren. Die zweite Teilachse 11 ist mit dem zweiten Antriebsaggregat 7 drehmomentübertragend gekoppelt. Vorzugsweise ist die zweite Teilachse 11 als zweite Abtriebswelle der Antriebseinrichtung 3 ausgebildet und eingerichtet, um eine Drehmomentübertragung zwischen dem zweiten Antriebsaggregat 7 und einem - in Figur 1 nicht dargestellten - zweiten Rad des Kraftfahrzeugs 1 zu realisieren. Das erste Antriebsaggregat 5 und das zweite Antriebsaggregat 7 sind achsparallel zueinander angeordnet.

Bei einem bevorzugten Ausführungsbeispiel des Kraftfahrzeugs 1 ist die Antriebseinrichtung 3 zum Antrieb einer Vorderachse des Kraftfahrzeugs 1 ausgebildet. Alternativ ist die Antriebseinrichtung 3 vorzugsweise zum Antrieb einer Hinterachse des Kraftfahrzeugs 1 ausgebildet. Bei einem weiteren bevorzugten Ausführungsbeispiel des Kraftfahrzeugs 1 weist das Kraftfahrzeug 1 zwei Antriebseinrichtungen 3 auf, wobei eine erste der Antriebseinrichtungen 3 eingerichtet ist zum Antrieb der Vorderachse des Kraftfahrzeugs 1, und wobei eine zweite der Antriebseinrichtungen 3 eingerichtet ist zum Antrieb einer Hinterachse des Kraftfahrzeugs 1.

Vorzugsweise sind die beiden Antriebsaggregate 5, 7 - wie in Figur 1 dargestellt - in Längsrichtung des Kraftfahrzeugs 1 hintereinander angeordnet. Die Längsrichtung des Kraftfahrzeugs 1 ist durch einen mit dem Bezugszeichen 19 versehenen Doppelpfeil dargestellt.

Vorzugsweise sind das erste Antriebsaggregat 5 und das zweite Antriebsaggregat 7 in Querrichtung bezüglich der Drehachse 15 der ersten Teilachse 9 und/oder der zweiten Teilachse 11 fluchtend angeordnet. Die Querrichtung bezüglich der Drehachse 15 der ersten Teilachse 9 und/oder der zweiten Teilachse 11 ist besonders bevorzugt eine Richtung gemäß einem mit dem Bezugszeichen 21 gekennzeichneten Doppelpfeil. Alternativ ist die Querrichtung vorzugsweise eine Richtung, welche mit der Bildebene von Figur 1 einen von 0° verschiedenen Winkel einschließt. Bei dem Ausführungsbeispiel gemäß Figur 1 fallen die Querrichtung 21 bezüglich der Drehachse 15 und die Längsrichtung 19 des Kraftfahrzeugs 1 zusammen.

Das erste Antriebsaggregat 5 und das zweite Antriebsaggregat 7 sind hier an einem bezüglich einer - in Figur 1 nicht dargestellten - Karosserie des Kraftfahrzeugs 1 federnd aufgehängten Hilfsrahmen 23 angeordnet. Der Hilfsrahmen 23 wird auf einer ersten Seite 25 desselben, an welcher die erste Teilachse 9 angeordnet ist, von einer Mehrzahl von Lenkern 27, hier vier Lenkern 27, von denen der Übersichtlichkeit wegen nur ein Lenker 27 mit einem Bezugszeichen versehen ist, gestützt und vorzugsweise mit der Karosserie des Kraftfahrzeugs 1 gekoppelt. Die Antriebsaggregate 5, 7 sind also nur über den Hilfsrahmen 23 mit der Karosserie gekoppelt. Darüber hinaus wird der Hilfsrahmen 23 auf einer zweiten Seite 29 desselben, an welcher die zweite Teilachse 11 angeordnet ist, von einer Mehrzahl von Lenkern 27, hier vier Lenkern 27, von denen der Übersichtlichkeit wegen nur ein Lenker 27 mit einem Bezugszeichen versehen ist, gestützt und vorzugsweise mit der Karosserie des Kraftfahrzeugs 1 gekoppelt. Der Hilfsrahmen 23 ist mittels einer Anzahl von Federn 31, hier zwei Federn 31, federnd bezüglich der Karosserie des Kraftfahrzeugs 1 aufgehängt. Über den Hilfsrahmen 23 ist hier insbesondere die Antriebseinrichtung 3 federnd bezüglich der Karosserie des Kraftfahrzeugs 1 aufgehängt.

Das erste Antriebsaggregat 5 weist hier eine erste - in Figur 1 nicht dargestellte - Antriebswelle 33, welche durch eine strichpunktierte Linie 35 schematisch dargestellt ist, auf. Das zweite Antriebsaggregat 7 weist hier eine zweite - in Figur 1 nicht dargestellte - Antriebswelle 37, welche mittels einer strichpunktierten Linie 39 schematisch dargestellt ist, auf. Die erste Antriebswelle 33 des ersten Antriebsaggregats 5 und die zweite Antriebswelle 37 des zweiten Antriebsaggregats 7 sind hier jeweils parallel zu der Drehachse 15 der ersten Teilachse 9 und/oder der zweiten Teilachse 11 angeordnet.

Die Antriebseinrichtung 3 weist ein erstes Getriebe 41 zur Drehmomentübertragung zwischen dem ersten Antriebsaggregat 5 und der ersten Teilachse 9 auf. Alternativ oder zusätzlich - bei dem hier gezeigten Ausführungsbeispiel zusätzlich - weist die Antriebseinrichtung 3 ein zweites Getriebe 43 zur Drehmomentübertragung zwischen dem zweiten Antriebsaggregat 7 und der zweiten Teilachse 11 auf.

Das erste Getriebe 41 und das zweite Getriebe 43 sind jeweils als Stirnradgetriebe mit mindestens einer Getriebestufe ausgebildet. Bei dem Ausführungsbeispiel gemäß Figur 1 sind das erste Getriebe 41 und das zweite Getriebe 43 jeweils als Stirnradgetriebe mit zwei Getriebestufen ausgebildet.

Das erste Getriebe 41 weist hier eine erste Getriebestufe 45 auf. Die erste Getriebestufe 45 weist ein erstes Ritzel 45' auf, welches mit der ersten Antriebswelle 33 drehmomentübertragend gekoppelt ist. Eine Drehachse des ersten Ritzels 45' verläuft hier entlang der strichpunktierten Linie 35 und entspricht mithin der Drehachse der ersten Antriebswelle 33. Weiterhin weist die erste Getriebestufe 45 ein zweites Ritzel 45" auf, welches mit dem ersten Ritzel 45' kämmt. Das zweite Ritzel 45" weist eine Drehachse auf, welche in Figur 1 durch eine strichpunktierte Linie 46 dargestellt ist.

Weiterhin weist das erste Getriebe 41 eine zweite Getriebestufe 47 auf. Die zweite Getriebestufe 47 weist ein erstes Ritzel 47' auf, welches mit dem zweiten Ritzel 45" drehmomentübertragend gekoppelt ist. Eine Drehachse des ersten Ritzels 47' ist hier gleich der Drehachse des zweiten Ritzels 45", mithin der Drehachse 46. Die zweite Getriebestufe 47 weist weiterhin ein zweites Ritzel 47" auf, welches mit dem ersten Ritzel 47' kämmt. Das zweite Ritzel 47" ist mit der ersten Teilachse 9 drehmomentübertragend gekoppelt, wobei eine Drehachse des zweiten Ritzels 47" hier gleich der Drehachse 15 der ersten Teilachse 9 ist.

Der Aufbau des zweiten Getriebes 43 ist vorzugsweise analog zu dem Aufbau des ersten Getriebes 41 ausgestaltet. Das zweite Getriebe 43 weist hier eine erste Getriebestufe 49 auf. Die erste Getriebestufe 49 weist ein erstes Ritzel 49' auf, welches mit der zweiten Antriebswelle 37 drehmomentübertragend gekoppelt ist. Eine Drehachse des ersten Ritzels 49' verläuft hier entlang der strichpunktierten Linie 39 und entspricht mithin der Drehachse der zweiten Antriebswelle 37. Weiterhin weist die erste Getriebestufe 49 ein zweites Ritzel 49" auf, welches mit dem ersten Ritzel 49' kämmt. Das zweite Ritzel 49" weist eine Drehachse auf, welche in Figur 1 durch eine strichpunktierte Linie 50 dargestellt ist.

Weiterhin weist das zweite Getriebe 43 eine zweite Getriebestufe 51 auf. Die zweite Getriebestufe 51 weist ein erstes Ritzel 51' auf, welches mit dem zweiten Ritzel 49" drehmomentübertragend gekoppelt ist. Eine Drehachse des ersten Ritzels 51' ist hier gleich der Drehachse des zweiten Ritzels 49", mithin der Drehachse 50. Die zweite Getriebestufe 51 weist weiterhin ein zweites Ritzel 51" auf, welches mit dem ersten Ritzel 51' kämmt. Das zweite Ritzel 51" ist mit der zweiten Teilachse 11 drehmomentübertragend gekoppelt, wobei eine Drehachse des zweiten Ritzels 51" hier gleich der Drehachse 15 der zweiten Teilachse 11 ist.

Das erste Antriebsaggregat 5 und das zweite Antriebsaggregat 7 sind vorzugsweise jeweils als Elektromotor ausgebildet. Vorzugsweise sind dann die erste Antriebswelle 33 und die zweite Antriebswelle 37 jeweils als Rotorwellen ausgebildet.

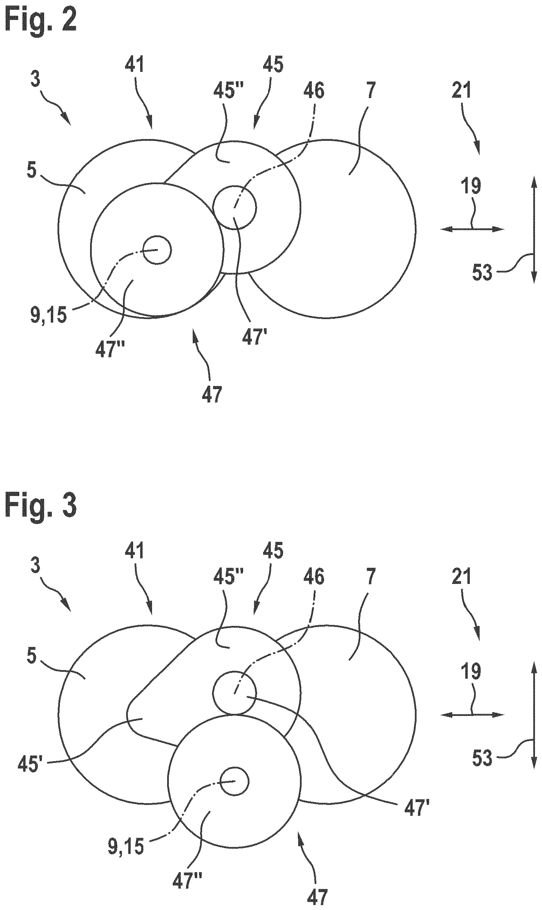

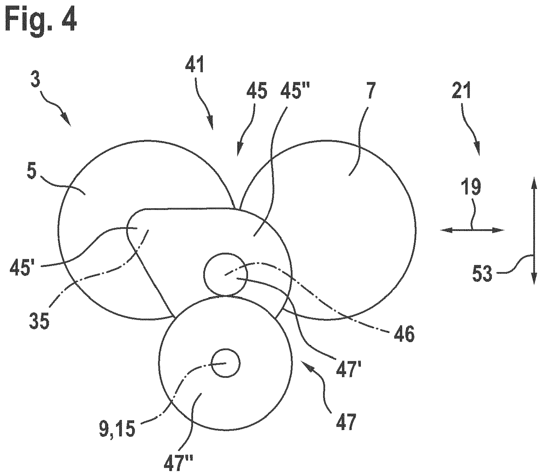

Figur 2 zeigt schematisch die Antriebseinrichtung 3 mit einem Getriebe in einer ersten Betriebsstellung in einer Seitenansicht. Bei dem Getriebe handelt es sich exemplarisch um das erste Getriebe 41. Das im Folgenden zu diesem Ausführungsbeispiel Gesagte kann jedoch analog auch auf ein entsprechendes Ausführungsbeispiel mit dem zweiten Getriebe 43 übertragen werden. Gleiches gilt für die Beschreibung der Ausführungsbeispiele gemäß den Figuren 3 und 4, welche ebenfalls analog auf entsprechende Ausführungsbeispiele mit dem zweiten Getriebe 43 übertragen werden kann. Gleiche und funktionsgleiche Elemente sind mit gleichen Bezugszeichen versehen, sodass insofern auf die vorangegangene Beschreibung verwiesen wird.

Bei dem Ausführungsbeispiel gemäß Figur 2 ist eine Verlagerung der ersten Teilachse 9 relativ zu dem ersten Antriebsaggregat 5 in Querrichtung 21 bezüglich der Drehachse 15 der ersten Teilachse 9, wobei die Drehachse 15 in Figur 2 - aus Sicht des Betrachters - orthogonal zu der Bildebene von Figur 2 verläuft, durch eine bestimmte Drehung der mindestens einen Getriebestufe 45, 47 des ersten Getriebes 41 bewirkbar. Die Querrichtung 21 bezüglich der Drehachse 15 der ersten Teilachse 9 ist vorzugsweise eine Richtung, welche insbesondere die Längsrichtung 19 und/oder eine Höhenrichtung des Kraftfahrzeugs 1, welche in Figur 2 durch einen mit dem Bezugszeichen 53 versehenen Doppelpfeil dargestellt ist, als Komponenten aufweist. Die Höhenrichtung 53 steht insbesondere orthogonal auf einer - in Figur 2 nicht dargestellten - Ebene, auf welcher das Kraftfahrzeug 1 steht oder fährt.

Die bestimmte Drehung der ersten Getriebestufe 45 mit dem - in Figur 2 nicht dargestellten - ersten Ritzel 45' und dem zweiten Ritzel 45" ist insbesondere um die Drehachse 35 bewirkbar. Die bestimmte Drehung der zweiten Getriebestufe 47 mit dem ersten Ritzel 47' und dem zweiten Ritzel 47" ist insbesondere um die Drehachse 46 bewirkbar. Hieraus ergibt sich selbstverständlich, dass die erste Teilachse 9 relativ zu dem ersten Antriebsaggregat 5 in Querrichtung 21 bezüglich der Drehachse 15 der ersten Teilachse 9, mithin in Längsrichtung 19 und/oder in Höhenrichtung 53, bewirkbar ist.

Alternativ oder zusätzlich ist in analoger Weise eine Verlagerung der zweiten Teilachse 11 relativ zu dem zweiten Antriebsaggregat 7 in Querrichtung 21 bezüglich der Drehachse 15 der zweiten Teilachse 11 durch eine bestimmte Drehung der mindestens einen Getriebestufe, mithin der ersten Getriebestufe 49 und/oder der zweiten Getriebestufe 51 des zweiten Getriebes 43, bewirkbar. Diese Verlagerung der zweiten Teilachse 11 relativ zu dem zweiten Antriebsaggregat 7 erfolgt analog zur Verlagerung der ersten Teilachse 9 relativ zu dem ersten Antriebsaggregat 5, welche in Figur 2 dargestellt ist.

Durch die variable Anordnung der Teilachsen 9, 11 relativ zu den Antriebsaggregaten 5, 7 mittels der beschriebenen Verlagerung kann die Antriebseinrichtung 3 insbesondere an spezifische Bauraumanforderungen insbesondere an einer Vorderachse oder einer Hinterachse des Kraftfahrzeugs 1 angepasst werden. Weiterhin kann eine flexible Anordnung beziehungsweise Verlagerung der ersten Teilachse 9 und/oder der zweiten Teilachse 11 in Abhängigkeit von einer Lage einer Lenkung des Kraftfahrzeugs 1 gestaltet werden.

Figur 3 zeigt eine schematische Darstellung der Antriebseinrichtung 3 mit dem ersten Getriebe 41 in einer zweiten Betriebsstellung in einer Seitenansicht. Gleiche und funktionsgleiche Elemente sind mit gleichen Bezugszeichen versehen, sodass insofern auf die vorangegangene Beschreibung verwiesen wird. Die in Figur 3 dargestellte zweite Betriebsstellung unterscheidet sich von der in Figur 2 dargestellten ersten Betriebsstellung insofern, als das zweite Ritzel 47" - aus Sicht des Betrachters gesehen - um die Drehachse 46 entgegen dem Uhrzeigersinn in Längsrichtung 19 nach rechts und in Höhenrichtung 53 nach unten verlagert ist.

Figur 4 zeigt eine schematische Darstellung der Antriebseinrichtung 3 mit dem ersten Getriebe 41 in einer dritten Betriebsstellung in einer Seitenansicht. Gleiche und funktionsgleiche Elemente sind mit gleichen Bezugszeichen versehen, sodass insofern auf die vorangegangene Beschreibung verwiesen wird. Die in Figur 4 dargestellte dritte Betriebsstellung unterscheidet sich von der in Figur 3 dargestellten zweiten Betriebsstellung im Wesentlichen dadurch, dass das zweite Ritzel 45" gegenüber dem ersten Ritzel 45' um die Drehachse 35 - aus Sicht des Betrachters gesehen - im Uhrzeigersinn verlagert ist. Dies bewirkt insbesondere eine Verlagerung der ersten Teilachse 9 gegenüber dem ersten Antriebsaggregat 5 in Querrichtung 21, wobei in Figur 4 insbesondere eine Verlagerung der ersten Teilachse 9 in Höhenrichtung 53 - aus Sicht des Betrachters gesehen - nach unten bewirkt ist.

Insgesamt zeigt sich, dass durch die achsparallele Anordnung des ersten Antriebsaggregats 5 und des zweiten Antriebsaggregats 7 der für die Antriebseinrichtung 3 erforderliche Bauraum signifikant reduziert werden kann. Hierdurch können insbesondere zusätzliche Funktionen und hierzu erforderliche Einrichtungen in ein die Antriebseinrichtung 3 aufweisendes Kraftfahrzeug 1 eingebaut werden. Weiterhin können dadurch die Kosten der Antriebseinrichtung 3 und eines die Antriebseinrichtung 3 aufweisenden Kraftfahrzeugs 1 gesenkt werden.

## Patentansprüche

1. Antriebseinrichtung (3) für ein Kraftfahrzeug (1), mit
- einem ersten Antriebsaggregat (5), einem zweiten Antriebsaggregat (7) und einer eine erste Teilachse (9) und eine zweite Teilachse (11) aufweisenden Radachse (13), wobei
- die Teilachsen (9,11) in Längsrichtung (17) bezüglich einer Drehachse (15) der ersten Teilachse (9) und/oder der zweiten Teilachse (11) zumindest teilweise auf einander gegenüberliegenden Seiten des ersten Antriebsaggregats (5) und des zweiten Antriebsaggregats (7) angeordnet sind, wobei
- die erste Teilachse (9) mit dem ersten Antriebsaggregat (5) und die zweite Teilachse (11) mit dem zweiten Antriebsaggregat (7) drehmomentübertragend gekoppelt sind, wobei
- das erste Antriebsaggregat (5) und das zweite Antriebsaggregat (7) achsparallel zueinander und in Längsrichtung des Kraftfahrzeugs unmittelbar aufeinanderfolgend angeordnet sind, und wobei
- die Antriebseinrichtung (3) ein erstes Getriebe (41) zur Drehmomentübertragung zwischen dem ersten Antriebsaggregat (5) und der ersten Teilachse (9) und ein zweites Getriebe (43) zur Drehmomentübertragung zwischen dem zweiten Antriebsaggregat (7) und der zweiten Teilachse (11) aufweist,
**dadurch gekennzeichnet, dass**
- das erste Getriebe (41) und das zweite Getriebe (43) jeweils als Stirnradgetriebe mit jeweils zwei Getriebestufen (45,47,49,51) ausgebildet sind, wobei
- eine Verlagerung der ersten Teilachse (9) relativ zu dem ersten Antriebsaggregat (5) in Querrichtung (21) bezüglich der Drehachse (15) der ersten Teilachse (9) durch eine bestimmte Drehung einer ersten der beiden Getriebestufen (45,47) und eine bestimmte Drehung einer zweiten der beiden Getriebestufen (45,47) des ersten Getriebes (41) bewirkbar ist, und/oder dass eine Verlagerung der zweiten Teilachse (11) relativ zu dem zweiten Antriebsaggregat (7) in Querrichtung (21) bezüglich der Drehachse (15) der zweiten Teilachse (11) durch eine bestimmte Drehung einer ersten der beiden Getriebestufen (49,51) und eine bestimmte Drehung einer zweiten der beiden Getriebestufen (49,51) des zweiten Getriebes (43) bewirkbar ist.

2. Antriebseinrichtung (3) nach Anspruch 1, **dadurch gekennzeichnet, dass** das erste Antriebsaggregat (5) und das zweite Antriebsaggregat (7) in Querrichtung (21) bezüglich der Drehachse (15) der ersten Teilachse (9) und/oder der zweiten Teilachse (11) fluchtend angeordnet sind.

3. Antriebseinrichtung (3) nach einem der vorhergehenden Ansprüche, **dadurch gekennzeichnet, dass** eine erste Antriebswelle (33) des ersten Antriebsaggregats (5) und eine zweite Antriebswelle (37) des zweiten Antriebsaggregats (7) jeweils parallel zu der Drehachse (15) der ersten Teilachse (9) und/oder der zweiten Teilachse (11) angeordnet sind.

4. Antriebseinrichtung (3) nach einem der vorhergehenden Ansprüche, **dadurch gekennzeichnet, dass** das erste Antriebsaggregat (5) und das zweite Antriebsaggregat (7) jeweils als Elektromotor ausgebildet sind.

5. Kraftfahrzeug (1) mit mindestens einer Antriebseinrichtung (3) nach einem der Ansprüche 1 bis 4.

6. Kraftfahrzeug (1) nach Anspruch 5, **dadurch gekennzeichnet, dass** die beiden Antriebsaggregate (5,7) in Längsrichtung (19) des Kraftfahrzeugs (1) hintereinander angeordnet sind.

7. Kraftfahrzeug (1) nach Anspruch 5 oder 6, **dadurch gekennzeichnet, dass** das erste Antriebsaggregat (5) und das zweite Antriebsaggregat (7) an einem bezüglich einer Karosserie des Kraftfahrzeugs (1) federnd aufgehängten Hilfsrahmen (23) angeordnet sind.

## Claims

1. Drive apparatus (3) for a motor vehicle (1), having
- a first drive unit (5), a second drive unit (7) and a wheel axle (13) having a first partial axle (9) and a second partial axle (11), wherein
- the partial axles (9, 11) are at least partially arranged in longitudinal direction (17) relative to an axis of rotation (15) of the first partial axle (9) and/or the second partial axle (11) on opposite sides of the first drive unit (5) and the second drive unit (7), wherein
- the first partial axle (9) is coupled with the first drive unit (5) and the second partial axle (11) is coupled with the second drive unit (7) in a torque-transmitting manner, wherein
- the first drive unit (5) and the second drive unit (7) are arranged axially parallel to one another and in direct succession in the longitudinal direction of the motor vehicle, and wherein
- the drive apparatus (3) has a first gear (41) for transmitting torque between the first drive unit (5) and the first partial axle (9) and a second gear (43) for transmitting torque between the second drive unit (7) and the second partial axle (11),
**characterised in that**
- the first gear (41) and the second gear (43) are each designed as spur gears, each with two transmission stages (45, 47, 49, 51), wherein
- a displacement of the first partial axle (9) relative to the first drive unit (5) in a transverse direction (21) relative to the axis of rotation (15) of the first partial axle (9) can be effected by a specific rotation of a first of the two transmission stages (45, 47) and a specific rotation of a second of the two transmission stages (45, 47) of the first gear (41), and/or **in that** a displacement of the second partial axle (11) relative to the second drive unit (7) in a transverse direction (21) relative to the axis of rotation (15) of the second partial axle (11) can be effected by a specific rotation of a first of the two transmission stages (49, 51) and a specific rotation of a second of the two transmission stages (49, 51) of the second gear (43).

2. Drive apparatus (3) according to claim 1, **characterised in that** the first drive unit (5) and the second drive unit (7) are arranged in alignment in a transverse direction (21) relative to the axis of rotation (15) of the first partial axle (9) and/or the second partial axle (11).

3. Drive apparatus (3) according to any of the preceding claims, **characterised in that** a first drive shaft (33) of the first drive unit (5) and a second drive shaft (37) of the second drive unit (7) are each arranged parallel to the axis of rotation (15) of the first partial axle (9) and/or the second partial axle (11).

4. Drive apparatus (3) according to any of the preceding claims, **characterised in that** the first drive unit (5) and the second drive unit (7) are each designed as an electric motor.

5. Motor vehicle (1) having at least one drive apparatus (3) according any of claims 1 to 4.

6. Motor vehicle (1) according to claim 5, **characterised in that** the two drive units (5,7) are arranged one behind the other in the longitudinal direction (19) of the motor vehicle (1).

7. Motor vehicle (1) according to claim 5 or 6, **characterised in that** the first drive unit (5) and the second drive unit (7) are arranged on a spring-mounted suspended subframe (23) relative to a body of the motor vehicle (1).

## Revendications

1. Appareil de propulsion (3) pour un véhicule à moteur (1), avec
- un premier groupe motopropulseur (5), un second groupe motopropulseur (7) et un axe de roue (13) présentant un premier axe secondaire (9) et un second axe secondaire (11), dans lequel
- les axes secondaires (9, 11) dans la direction longitudinale (17) par rapport à un axe de rotation (15) du premier axe secondaire (9) et/ou du second axe secondaire (11) sont agencés au moins en partie sur des côtés opposés les uns aux autres du premier groupe motopropulseur (5) et du second groupe motopropulseur (7), dans lequel
- le premier axe secondaire (9) est couplé de manière à transmettre le couple au premier groupe motopropulseur (5) et le second axe secondaire (11) est couplé de manière à transmettre le couple au second groupe motopropulseur (7), dans lequel
- le premier groupe motopropulseur (5) et le second groupe motopropulseur (7) sont agencés axialement parallèlement l'un à l'autre et directement l'un après l'autre dans la direction longitudinale du véhicule à moteur, et dans lequel
- l'appareil de propulsion (3) présente une première transmission (41) pour la transmission de couple entre le premier groupe motopropulseur (5) et le premier axe secondaire (9) et une seconde transmission (43) pour la transmission de couple entre le second groupe motopropulseur (7) et le second axe secondaire (11),
**caractérisé en ce que**
- la première transmission (41) et la seconde transmission (43) sont respectivement réalisées comme un engrenage droit avec respectivement deux paliers de transmission (45, 47, 49, 51),
dans lequel
- un déplacement du premier essieu secondaire (9) relativement au premier groupe motopropulseur (5) dans la direction transversale (21) par rapport à l'axe de rotation (15) du premier essieu secondaire (9) peut être effectué par une rotation déterminée d'un premier des deux paliers de transmission (45, 47) et une rotation déterminée d'un second des deux paliers de transmission (45, 47) de la première transmission (41), et/ou **en ce qu'**un déplacement du second essieu secondaire (11) relativement au second groupe motopropulseur (7) dans la direction transversale (21) par rapport à l'axe de rotation (15) du second essieu secondaire (11) peut être effectué par une rotation déterminée d'un premier des deux paliers de transmission (49, 51) et une rotation déterminée d'un second des deux paliers de transmission (49, 51) du second essieu secondaire (43).

2. Appareil de propulsion (3) selon la revendication 1, **caractérisé en ce que** le premier groupe motopropulseur (5) et le second groupe motopropulseur (7) sont agencés en alignement dans la direction transversale (21) par rapport à l'axe de rotation (15) du premier essieu second (9) et/ou du second essieu secondaire (11).

3. Appareil de propulsion (3) selon l'une quelconque des revendications précédentes, **caractérisé en ce qu'**un premier arbre d'entraînement (33) du premier groupe motopropulseur (5) et un second arbre d'entraînement (37) du second groupe motopropulseur (7) sont respectivement agencés parallèlement à l'axe de rotation (15) du premier essieu secondaire (9) et/ou du second essieu secondaire (11).

4. Appareil de propulsion (3) selon l'une quelconque des revendications précédentes, **caractérisé en ce que** le premier groupe motopropulseur (5) et le second groupe motopropulseur (7) sont respectivement réalisés comme un moteur électrique.

5. Véhicule à moteur (1) équipé d'au moins un appareil de propulsion (3) selon l'une quelconque des revendications 1 à 4.

6. Véhicule à moteur (1) selon la revendication 5, **caractérisé en ce que** les deux groupes motopropulseurs (5, 7) sont agencés l'une derrière l'autre dans la direction longitudinale (19) du véhicule à moteur (1).

7. Véhicule à moteur (1) selon la revendication 5 ou 6, **caractérisé en ce que** le premier groupe motopropulseur (5) et le second groupe motopropulseur (7) sont agencés sur un faux-châssis (23) suspendu de manière élastique par rapport à une carrosserie du véhicule à moteur (1).
